# EUROPEAN PATENT APPLICATION

(11) **EP 1 959 652 A1**
(43) Date of publication of application: **20.08.2008**
(21) Application number: 07122870.4
(22) Date of filing: 11.12.2007
(51) Int. Cl.: H04M 1/725

(54) **Telephone background screensaver with live internet content**

(30) Priority: 15.02.2007 CA 2578690
(71) Applicant: Ascalade Communications Inc., Richmond, BC V6W 1K7 (CA)
(72) Inventor: Chung, Simon, Richmond British Columbia V6Y 3W9 (CA)
(74) Representative: Beattie, Alex Thomas Stewart

(57) **Abstract**

Discloses a system and method for display of live content on a telephone handset with an input keypad and a graphical display. The live content is gathered from a one source of live content information and a configuration agent receives user live content selection input from a computer or the handset and stores the selection a profile data base. A display agent interoperates with the profile database to obtain information from the user selected source of live content information and displays at least a portion of the information obtained on the telephone handset display. In a preferred manner of operation, a crawler connects to and receives information from an information provider and the received information is stored in an information cache. A display agent periodically dispatches information from the information cache to the handset display as selected by the user.

## Description

### FIELD OF THE INVENTION

This invention relates to apparatus and method to obtain information content from the Internet and more particularly relates to a user appliance and computer systems to facilitate delivery of temporal and location related Internet content to a telephone handset display.

### BACKGROUND OF THE INVENTION

The Internet provides an increasingly popular mechanism for exchange of communications between a computer based source of information located anywhere in the world and a remote user of that information operating an appliance to access the Internet such as a personal computer. Data traffic on the Internet supports a wide variety of protocols and content payloads to establish communications links or sessions that facilitate delivery of data from a source anywhere on the Internet to a user wishing to obtain that information. Over such communications links the Internet supports multiple protocols for transport of data payloads between an information provider and the recipient of that information. For example, a common protocol used is the hypertext transfer protocol (HTTP) which is used to exchange information between a computer server and consumers who operate a client application on an Internet access device, such as a PC, to accomplish a variety of tasks over the Internet including obtaining information about a company, participation in various messaging and chat services as well as day-to-day functions, such as, paying bills using banking websites and the like. Other protocols are in use and the number of protocols that are available are continually expanding.

One form of information source that is available on the Internet is a copy of a broadcast made by a television station or network or a radio broadcast made by a radio station or network. Other forms of information sources include trading activities on various stock markets, weather information and news information from news gatherers such as newspapers, local, cable network and satellite television or radio stations. These information sources provide content in various forms including text, image and streaming media. To obtain the information, a user connects to the Internet using a computer running a browser or media application to query and interact with a source web site or to obtain the information from the source web site or a version of broadcast programming that is a stored or a real time copy of a broadcast, which is then delivered to the user over the Internet computer network. For real time media sources, the information or programming source generally makes arrangements to provide a feed of the programming to a conversion service which makes the broadcast appearing on conventional broadcast distribution media also available to Internet users using the streaming media communications capabilities of the Internet. Generally a user that wishes to obtain broadcast programming or streaming from the Internet is provided with a client application to select and receive the broadcast that the user desires. A variety of streaming media client applications are available including Windows Media (trade-mark), Real Audio (trade-mark) and others.

Previous attempts to display Internet content on the display of a telephone handset has included such devices configured with a Wireless Access Protocol (WAP) browser application running on a cellular telephone handset. A disadvantage of this approach is that the desired content is accessed within the WAP browser, which means that the WAP browser has to be started and running in order to display the Internet content. This approach requires user input and handset manipulation, which does not provide the user with at-a-glance information when the handset is in standby or idle mode.

### SUMMARY OF THE INVENTION

The subject invention provides a simple and easy-to-use mechanism to obtain and present information from an Internet source and provides a user with a facility to obtain and display information including time varying information of a content type selected by a user on a telephone handset display.

In accordance with the invention, a telephone display provides at-a-glance access to live Internet content. The telephone display may be a base station display and preferably is a handset display. The display has a background or screensaver which displays live Internet content. Examples of content include providing the telephone user with at-a-glance access to live Internet content such as weather reports and forecasts, news headlines and sports scores on the telephone display screen.

The invention allows user selected or configured live Internet content to be displayed on a telephone when the device is in idle mode, obviating the need for a user to start any applications on the phone device in order to access their desired content.

In one of its aspects, the invention provides a system for display of live content on a telephone handset. The handset has an input keypad and a graphical display. A configuration agent is used to receive user live content selection input from the handset and store such input in a profile data base. A display agent interoperates with the profile database to obtain information from a source of live content information corresponding to the user live content selection input, which is stored in the profile database and displays at least a portion of the obtained information on the graphical display of the handset. In one preferred arrangement, the display agent further includes at least one information provider crawler to connect to and receive information from an information provider and store the information received from an information provider in an information cache. An information content acquisition and dispatch agent to connect to and receive information from the information cache and at least a portion the stored information is displayed on the handset display.

In another of its aspects, the invention provides a method for display of live content on a telephone handset including the steps of receiving user input of a selection of at least one source of live content information and storing the input in a profile database. Live content information is received from a source of live content information and at least a portion of the information received from the live content information source is displayed on the telephone handset display corresponding to the user selection stored in the profile database. In a preferred arrangement, the user input includes selection of content specific information from an information provider, such as specific geographic information from a weather information provider, specific securities information from a stock market information provider and specific content information from a news information provider.

In accordance with a preferred manner of operation, the information is received from a source of live content information by an information provider crawler that connects to and receives information from the information provider and stores it in an information cache. Periodically an information content acquisition and dispatch agent connects to and receives information from the information cache and displays at least a portion of it on the telephone handset display.

### BRIEF DESCRIPTION OF THE DRAWINGS

Embodiments of the present invention will now be described, by way of example only, with reference to the attached Figures, wherein:
Fig. 1 is a functional block diagram of an embodiment of the invention.
Fig. 2 shows an exemplary display of weather information on a handset graphical display.
Fig. 3 shows a functional block diagram of an embodiment of the invention having devices interconnecting with the Internet arranged to provide a live content background screen saver functionality.
Fig. 4 shows exemplary user interface screens used to capture user input selecting an information source which is to appear on the telephone display as live content background screen saver information.
Figure 5 shows an exemplary process flow of an information profile agent used to process user requests to select the live content graphical display that is to be provided on the user handset graphical display.
Figure 6 shows an exemplary process flow of a process daemon operating on the information profile agent or operating in conjunction with the information profile agent which processes the user profiles to provide the user selected live content on the graphical display of the user handset.

### DETAILED DESCRIPTION

In the following description, for purposes of explanation, numerous details are set forth in order to provide a thorough understanding of the present invention. However, it will be apparent to one skilled in the art that these specific details are not required in order to practice the present invention. In other instances, well-known electrical structures and circuits are shown in block diagram form in order not to obscure the present invention. For example, specific details are not provided as to whether the embodiments of the invention described herein are implemented as a software routine, hardware circuit, firmware, or a combination thereof.

Embodiments of the invention may be represented as a software product stored on a machine-readable medium (also referred to as a computer-readable medium, a processor-readable medium, or a computer usable medium having a computer readable program code embodied therein). The machine-readable medium may be any type of magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine readable medium may interface with circuitry to perform the described tasks.

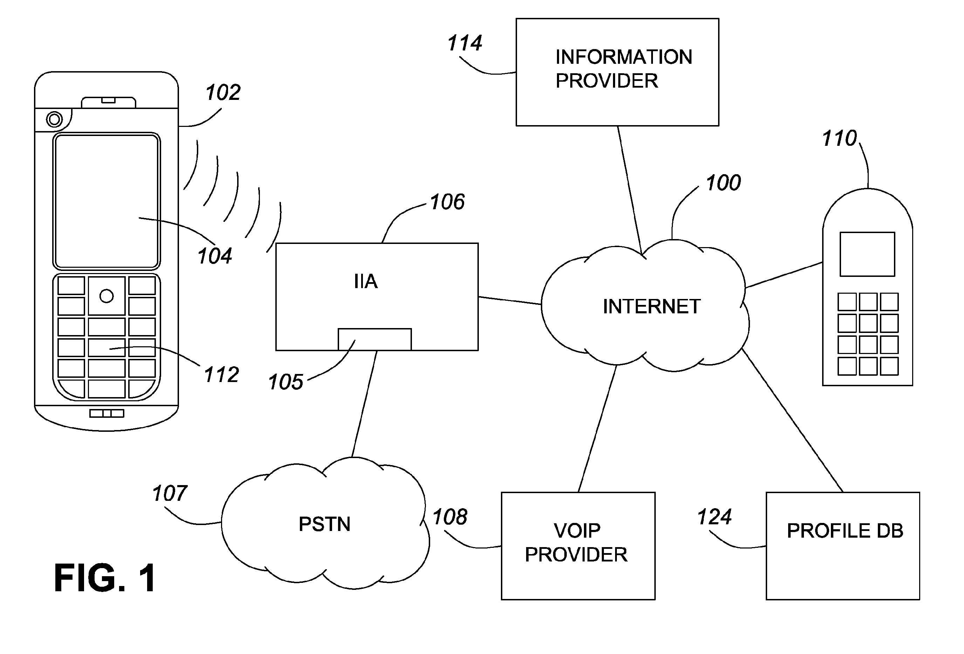

Fig. 1 is a functional block diagram of an embodiment of the invention arranged to facilitate communication over the Internet (100). A user handset (102) has a graphical display (104) which preferably is capable of displaying colour images. In a preferred embodiment, user handset (102) communicates with an Internet Interface Appliance (IIA) (106) which controls the protocols for call setup, session and teardown between the handset (102) and a Voice Over Internet Protocol (VoIP) provider (108). VoIP provider (108) provides VoIP services to enable the user handset (102) to establish a communications link with another user handset (110) also interoperating with the Internet and a registered user or subscriber to the VoIP services of the VOIP provider (108). The user handset includes a keypad (112) to provide extended user input at the user handset to control the operation of the handset and the Internet Interface Appliance (106) as well as direct calls and operate the service provided by the VolP provider (108). The Internet Interface Appliance interoperates with the user handset (102) to carry out the necessary call supervisory protocol messaging to establish a call to another user handset (110) or to receive a call from another user handset at the user handset (102). Optionally the IIA (106) has a coupling (105) for interconnection with the Public Switched Telephone Network (PSTN) (107) configured to place and receive calls over the PSTN. In accordance with the invention information from an information provider (114) is used as a background display on the graphical display (104) of the user handset (102). In a preferred arrangement the IIA (106) interfaces between and interoperates with the information provider (114) and handset (102) as an intermediary display agent to supply live content information to the handset display (104).

Information provider (114) is shown separately connected to the Internet (100) in the arrangement of Fig. 1, however, it will be understood that the information provider (114) can include a server application operating from the premises or establishment of the VoIP provider which operates a VoIP provider server (108) as shown in Fig. 1. The information provider is a gateway service that establishes communication with the user handset (104) to provide information to the display of the user handset (102). The display is a live content, that is to say, a time varying or temporal information display, which is content or location specific as selected by the user. Exemplary content includes weather information or stock market trading activity or news information from news gathers such as news papers or television or radio stations. User input of a desired or selected live content to appear on handset display (104) is stored in a profile database (124). In a preferred arrangement the IIA (106) interfaces between and interoperates with the profile database (124) and handset (102) as an intermediary configuration agent to receive user live content selection input from the handset keypad (112) and store such input the profile database (124).

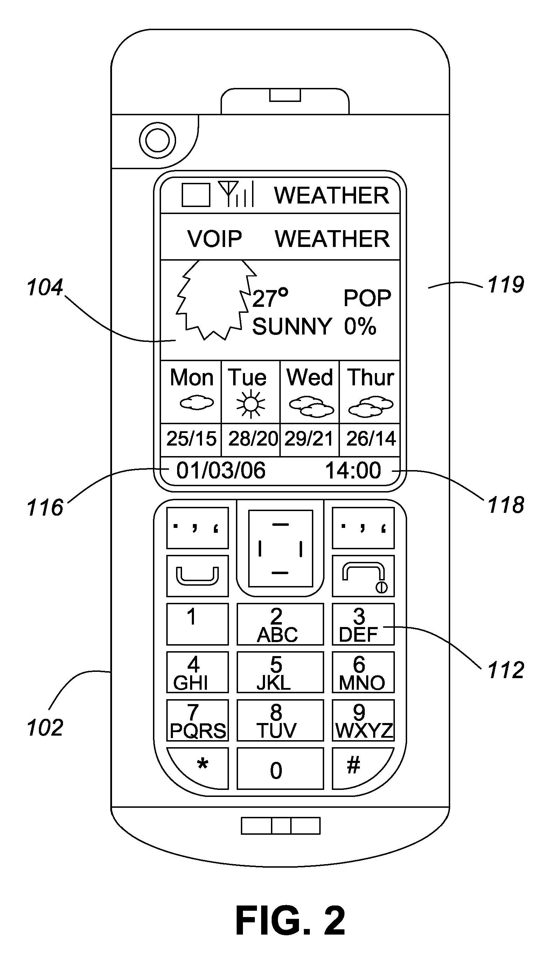

Fig. 2 shows an exemplary display of weather information on the handset graphical display (104). Shown along the bottom portion of the display are the current date (116) and time (118) together with a live content graphical display area, generally depicted by reference numeral (120), on the display. The example live content graphical display area is arranged to provide pertinent information to the user, for example, the current weather conditions together with a forecast for the days following.

In one preferred arrangement the user handset (102) and Internet Interface Appliance (106) interoperate with the Internet (100) using a wireless application protocol (WAP). WAP is an open international standard for applications that use wireless communications having a principal application to enable access to the Internet from devices with limited displays, that is small portable or pocket sized devices with a display, such as a mobile phone or personal digital assistant (PDA) device. A WAP browser is designed to provide functionality for all basic services of a computer based web browser but simplified to operate within the restrictions of the limited display area of a phone handset display device. WAP is a popular protocol used by a number of websites to provide information sources that are able to be accessed by mobile devices such as mobile phones or PDAs. These websites are referred to as WAP sites and a WAP display device is a network entity that has a unique device network address and is capable of sending and receiving information over a network, for example, the Internet 100. A WAP enabled device can act as both a client and server depending on the session or communication context or may act across or in multiple contexts. The device can include a Personal Digital Assistant (PDA) which is a small portable personal use device that is designed to run a variety of applications and interact with a user to accept extended textual input and may include the capability of placing and receiving phone calls.

In another preferred arrangement the user handset (102) and Internet Interface Appliance (106) operate using a Trivial File Transfer Protocol (TFTP), to transfer data to the user handset 102 and a TFTP server, which may be located at a website or as part of the functionality provided by or on behalf of a VoIP service provider. The TFTP server and the handset are capable of sending and receiving information over the network, typically, the Internet. The handset device can receive simple image data from the TFTP server either by periodic updates received from a TFTP server (push delivery) or by receiving responses from a TFTP server in reply to periodic polling of the TFTP server (pull delivery). A simple bitmap image can be received at the handset which is then posted to the handset display as a background image thereby requiring little or no significant processing or protocol parsing and decoding capability in the handset device itself, such as a telephone handset or a Personal Digital Assistant (PDA) type of device.

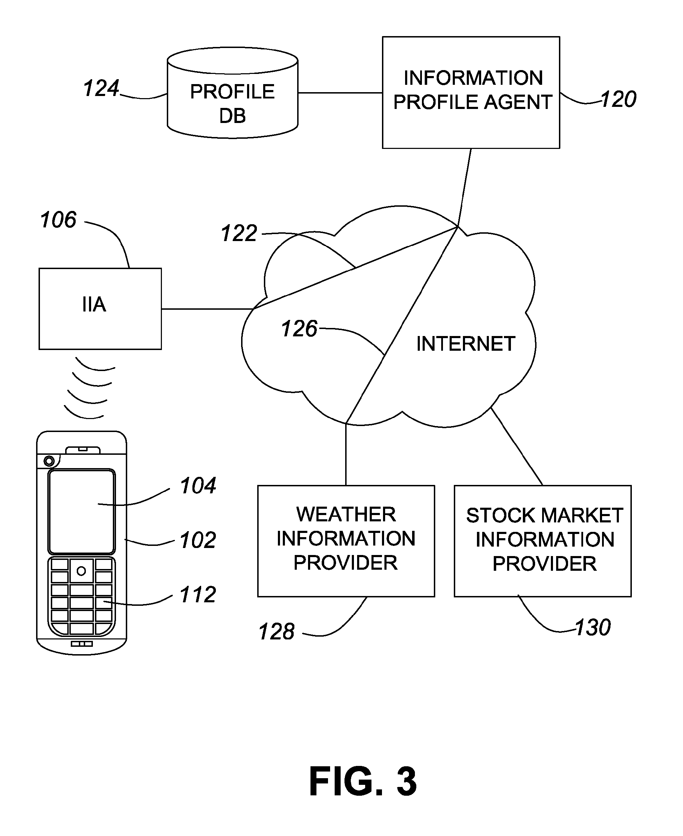

Fig. 3 shows a functional block diagram of an embodiment of the invention having devices interconnecting with the Internet arranged to provide a live content background screen saver functionality. The user accesses an information profile agent (120) application using a suitable device such as a user handset (102) or personal computer to establish a session with the information profile agent (120). The session is depicted by communications link (122) over the Internet. The information profile agent (120) has a configuration agent to operate in a configuration mode to accept user input defining the live content graphical display 119 that will be presented as background screensaver content and which is to appear on the graphical display (104) of the handset. Where the user input device is the handset 102, the user operates the handset keypad 112 to input a live content selection. The user live content selection input selects the information desired by the user from the options provided which are shown by way of example as weather information and stock market information in the exemplary configuration depicted in Fig. 3. The configuration agent of the information profile agent (120) records the user selection for the particular handset device in a user profile database (124). Each user handset (102) has a unique device address. The unique device address is used, on authentication of the user, to make and update profile entries in the profile database and, subsequently, is used during operation of the information delivery process to supply the live content to the unique device address of the telephone device.

In operation following configuration of a profile in the profile database (124), the information profile agent (120) includes a display agent functionality that is interoperable with the profile database to gather current information from the selected information provider. One manner of gathering current information by the display agent is to establish communications periodically with the stored profile database selected information provider to obtain updates and configure the updates for display on the user handset graphical display. For example, where a user live content selection input stored in the profile database indicates the user has selected weather information, the profile database 124 will specify that weather information is required and the display agent functionality of the profile agent will establish a communications link (126) with a weather information provider to obtain information on the weather which is then delivered to the user handset (102). Where a user has selected stock market information, a communications link will be established with a stock market information provider (130) to obtain stock market information relating to trades of specific securities and maintain in the user profile database which will then subsequently be displayed on the graphical display (104) of the device handset.

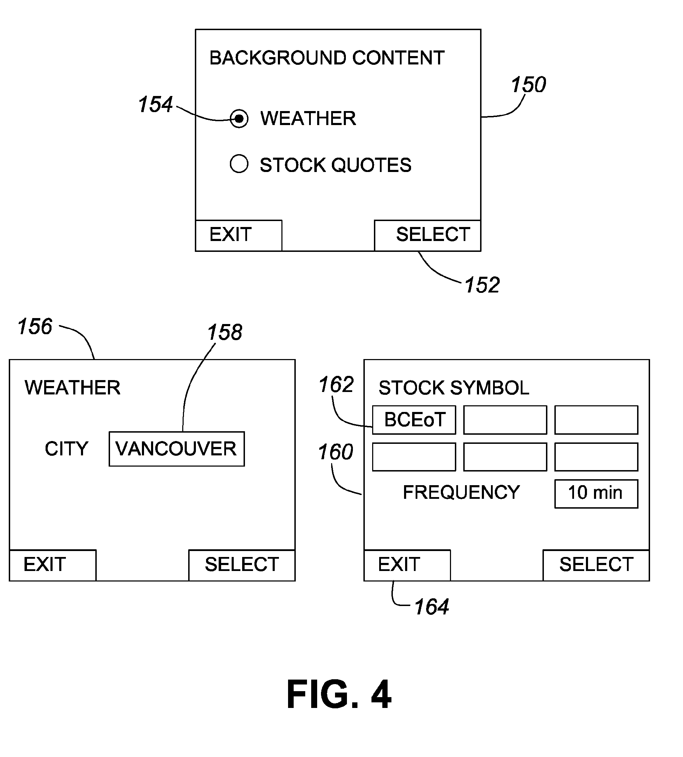

Fig. 4 shows exemplary user interface screens used to capture user input selecting an information source which is to appear on the telephone display as live content background screen saver information. A source selection screen (150) provides a selection list comprising, in the example shown, weather and stock quotes. The user is provided with a soft key input indicator (152) which allows the user to depress a key on the keypad (112) of the handset to cycle or rotate the selections through the available options with the user selection being indicated by a radio button control (154) corresponding to the selection made by the user. Where a user selects weather as a background content, a corresponding information options screen for weather (156) is supplied, which then enables the user to input further information identifying the particular contents selected. For example, in the example case where a weather selection is made, the user is provided with an input dialog box (158) to allow the user to input the particular city that the user wants the weather information to relate to. In another selection option, where the user has selected stock quotes from the source selection screen (150), a stock symbol information options screen for stocks (160) is provided which provides the user with a plurality of stock symbol input areas (162) to enable the user to specify the stock symbols that should appear on the telephone background screen saver.

Once the user selection is made, the user depresses the soft key corresponding to the exit action (164) which will cause the information profile agent (120) to update the user profile database (124) for the particular user handset (102). In this manner, the user is able to select the category and details for the live content information that the user desires to be provided as a screensaver background content on the handset display.

The information provider and profile agent may be operated separately from the VOIP service provider or may be operated by the VOIP service provider. In the preferred configuration, the user handset is authenticated to the VOIP service and, consequently, having the information profile agent application running as part of the VOIP services enables handset authentication in user profile selection to be maintained as a single authentication process. The VOIP provider can include both free content or paid content to appear on the background screensaver which, conveniently, can be billed on the user account that corresponds to the device handset that the information selected by the user is provided for.

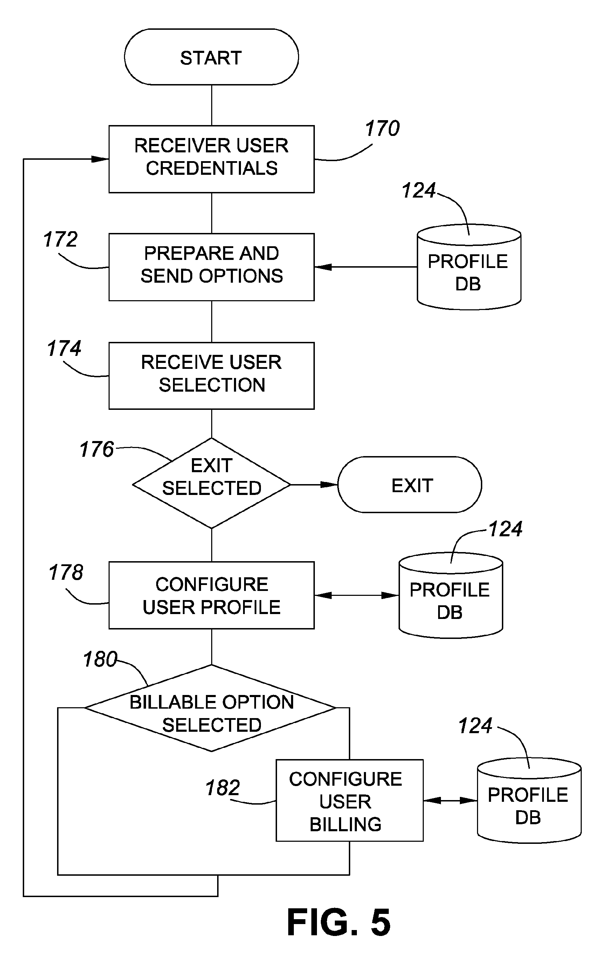

Figure 5 shows an exemplary process flow of an information profile agent used to process user requests to select the live content graphical display that is to be provided on the user handset graphical display 104. The process starts by receiving user credentials that correspond to the unique network address of the user which corresponds to either the user handset 102 or the Internet interface appliance 106 depending on the desired configuration parameters for the user account at the VoIP service provider that the user is configuring the handset for. The user's credentials are obtained through a validation process that validates the user handset 102 to the VoIP service and consequently the information profile agent 120. This process step is depicted in process box 170 of Figure 5. The information profile agent will query the profile data base 124 to obtain the user profile parameters for the selected and available options as depicted by process box 172. This will configure the background content source selection screen 150 as depicted in Figure 4. The user will then manipulate the input device, typically the keyboard of the user handset 102, which will be received by the information profile agent as shown in process step 174. The received user selection is tested to determine if the user has selected the exit option, in which case the exit option of the exit selected test 176 is taken. Otherwise, the user selection is parsed by the information profile agent 120 in the configure user profile process box 178, which results in updating the profile data base 124 to correspond with the user selection. A test of the user selection is performed at the Billable Option Selected decision box 180 to determine if the user selection involves a billable service. When the user configures a billable option, the profile data base 124 is updated to record the billing information as depicted by the Configure User Billing process box 182. In this manner, user options are processed until the user indicates that the live content option selection is completed by selecting exit from the option selection screen. The process communications between the information profile agent and the user input takes place over a network as depicted in Figure 3.

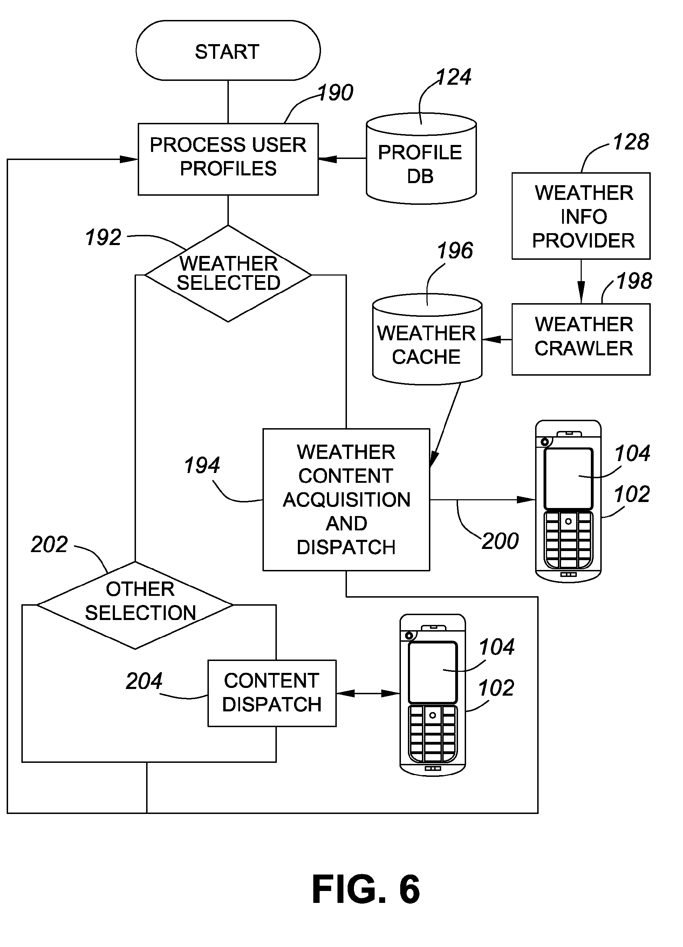

Figure 6 shows an exemplary process flow of a process daemon operating on the information profile agent or operating in conjunction with the information profile agent, which processes the user profiles in the profile database 124 to provide the user selected live content on the graphical display of the user handset. The process daemon processes each of the user profiles stored in the profile data base 124, as depicted by process box 190. Each stored user profile is processed to determine what content the user has selected for the live content background on the telephone handset display. An example is detailed in Figure 6 for a user that has selected a weather background. An information cache contains information obtained from an information provider and an information content acquisition and dispatch agent connects to the information cache to receive information from the information cache and dispatches at least a portion of the received information to the handset for display by the display agent. For example, where the stored profile database record being processed indicates the user has selected weather, as determined by the Weather Selected test box 192, the Weather Content Acquisition and Dispatch process 194 is performed. The acquisition step involves reading the information available from a Weather Cache 196, which maintains a cache of information content that is supplied to the Weather Content Acquisition and Dispatch process 194. The current weather information in the Weather Cache 196 is obtained from a weather information provider 128. The weather information provider supplies information by a location, or city. A Weather Crawler process 198 interfaces with each weather information provider to gather and collect information from the weather information provider 128 and format that weather information for storage in the weather cache 196. When the weather content acquisition and dispatch process 194 requests weather information, that request corresponds to the desired user profile, i.e. city,. The information contained in the weather cache 196 for the user specified location may be current and be satisfied by information currently available in the weather cache 196. However, stale information or information which is aged beyond the user selected parameters may trigger the weather cache to activate the weather crawler 198 to gather more specific information for a desired location from the weather information provider 128. In the preferred manner of operation, the weather crawler 198 is activated to communicate with a external weather information provider 128 only when the information obtained in the weather cache 196 is stale and unusable. The Weather Content Acquisition and Dispatch process 194 thus has current weather information for the user selected parameters, which is then supplied to the handset 102, as depicted communications link 200 in the figure.

The content that is dispatched to the handset 102 by the Weather Content Acquisition and Dispatch process 194 is configured to minimize the traffic over communications link 200. Consequently, when a user has configured weather updates to occur, say, over a period of every hour, a dispatch of information to the handset 102 over communications link 200 occurs only for the user specified time frame, namely, one hour. In one arrangement the communications link 200 extends over the Internet as depicted in Figure 3. In this manner, current weather information as selected by the user is displayed on the handset 102 and is updated to a time frame or period or interval that corresponds to the user selection. The delivery of the background content to the user handset 102 is in the form of a protocol that is established between the VoIP provider and the handset. For example, the information may be provided to the handset 102 as a bit map image and consequently, that handset 102 is programmed to respond simply by displaying the received bit map image on the handset display 102. Alternately, the handset 102 may be configured to run a WAP browser in idle mode and the information delivered to the handset may be configured to conform to the WAP protocol. In yet another alternative arrangement, a VolP handset update mechanism using a simple Trivial File Transfer Protocol (TFTP) process exchange can be used. As will be understood, any suitable communications protocol that enables the content acquisition and dispatch process 194 to deliver content to the user handset for display of that content on the handset display 104 may be used.

Once the handset content acquisition and dispatch process is performed, the next user profile is processed as depicted by process block 190. Where a user has configured other live content background selections, the weather selected test exit to another selection is made, as depicted by the Other Selection decision box 202. As will be understood, the Other Selection decision box 202 may represent any number of other live content specific information sources or services such as news content or stock market trading content. The particular content will be supplied to the handset by a corresponding content acquisition and dispatch process as configured by the user when the user configured the desired live content option for the handset. In the example process flow of Figure 6 any other information content would generally follow the exemplary process flows detailed for the weather information example. Each other live content information source would preferably have an information cache, an information crawler and an information provider corresponding to the process shown and described in relation to the weather process, which has a weather cache 196, a weather crawler 198 and a weather information provider 128. For each other information content process, a content dispatch process will deliver the selected live content to the user handset using a suitable protocol such as WAP or Trivial File Transfer Protocol (TFTP) and the like.

While the invention has been described in relation to specific embodiments, the scope of the invention is defined by the claims appended hereto and is not limited to the specific embodiments, examples or instances described to illustrate and exemplify the invention. Numerous equivalent and alternative embodiments of the invention will occur to those skilled in the art that are within the scope of the invention as defined by the claims appended hereto.

## Claims

1. A system for providing of live content to a telephone handset (102) comprising:
i) a configuration agent (120) to receive user live content selection input and store such input in a profile database (124); and
ii) a display agent interoperable with the profile database (124) to obtain information from a source (114) of live content information corresponding to the user live content selection input stored in said profile database (124) and output at least a portion of the obtained information.

2. The system of claim 1 further including:
i) an internet interface appliance in communication with said configuration agent (120)and said display agent, and
ii) a graphical display interface to display said display agent output on a graphical display (104).

3. The system of claim 2 further including:
i) a handset (102) interoperable with said internet interface application, said handset (102) including an input keypad (112) to receive said user live content selection and said graphical display (104), said internet interface appliance interoperable with said handset (102) and connectable to the internet.

4. The system of claim 2 or 3 wherein said internet interface appliance further includes a coupling for interconnection with the Public Switched Telephone Network (PSTN) (107) configured to place and receive calls over the PSTN (107).

5. The system of any preceding claim where said display agent further includes:
i) at least one information provider crawler (198) to connect to and receive information from an information provider (128);
ii) an information cache (196) to store information received from an information provider (128); and
iii) an information content acquisition and dispatch agent (194) to connect to and receive information from said information cache (196) and dispatch at least a portion of such received information to said display agent.

6. The system of claim 5 wherein said information provider (128) includes at least one of a weather information provider, a stock market information provider and a news information provider.

7. A method for the display of live content on a telephone handset (102) comprising:
i) receiving user input of a selection of at least one source of live content information;
ii) receiving information from a source (114) of live content information; and
iii) displaying on the telephone handset display (104) at least a portion of the information received from said source (114) of live content information corresponding to the user live content selection input.

8. The method of claim 7 wherein the steps of receiving information from a source (114) of live content information and displaying at least a portion of the information received are performed periodically.

9. The method of claim 7 or 8 wherein the step of receiving user input of a selection of at least one source (114) of live content information includes user input of the period that the steps of receiving information from a source (114) of live content information and displaying at least a portion of the information received are performed.

10. The method of any one of claims 7 to 9 wherein the step of receiving user input of a selection of at least one source of live content information includes user input of an information provider (128) selected from at least one of a weather information provider, a stock market information provider and a news information provider.

11. The method of claim 10 wherein the step of receiving user input of a selection of at least one source (114) of live content information includes user input of content specific information from an information provider (128), including specific geographic information from a weather information provider, specific securities information from a stock market information provider and specific content information from a news information provider.

12. The method of any one of claims 7 to 11 wherein the step of receiving information from a source of live content information includes the steps of:
i) providing at least one information provider crawler (198) to connect to and receive information from an information provider (128); and
ii) storing the information received by the information provider crawler (198) from an information provider (128) in an information cache (196).

13. The method of claim 12 wherein the step of at least a portion of the information received from said source (114) of live content information corresponding to the user live content selection input includes the step of providing an information content acquisition and dispatch agent (194) to connect to and receive information from said information cache (196) and displaying at least a portion of such received information on said telephone handset display (104).

14. The method of any one of claims 7 to 13 further comprising the step of storing the received user input in a profile database (124), and wherein the step of displaying at least a portion of the information comprises displaying at least a portion of the information received from said source (114) of live content information corresponding to the user live content selection input stored in said profile database (124).
